# EUROPEAN PATENT APPLICATION

(11) **EP 4 726 895 A1**
(43) Date of publication of application: **15.04.2026**
(21) Application number: 24854424.9
(22) Date of filing: 09.08.2024
(51) Int. Cl.: H01M 50/317, H01M 50/105, H01M 50/183

(54) **POUCH CELL AND GAS DISCHARGE MEMBER**

(30) Priority: 11.08.2023 KR 20230105932
(71) Applicant: LG Energy Solution, Ltd., Seoul 07335 (KR)
(72) Inventor: KIM, Sang Hun, Daejeon 34122 (KR); HWANG, Ji Young, Daejeon 34122 (KR); PARK, Eun Suk, Daejeon 34122 (KR); YU, Hyung Kyun, Daejeon 34122 (KR); LEE, Yu Jin, Daejeon 34122 (KR); JU, Hye Yeong, Daejeon 34122 (KR)
(74) Representative: Goddar, Heinz J.
(86) International application number: PCT/KR2024/011935
(87) International publication number: WO 2025/037873

(57) **Abstract**

The present disclosure is directed to providing a gas release member that can release gas inside a pouch to the atmosphere and has a reduced deformation ratio and a pouch cell including the same. The pouch cell according to the present disclosure may include an electrode assembly including a positive electrode, a negative electrode and a separator, a pouch accommodating the electrode assembly, an electrode lead electrically connected to the electrode assembly and protruded outward from the pouch, a lead film covering a part of the electrode lead to isolate the electrode lead from the pouch, and a gas release member disposed between the electrode lead and the lead film and configured to form a gas movement route by gas inside the pouch, wherein the gas release member may include a first member, a part of which has a concave shape in a length direction of the electrode lead, and a second member extended from the first member toward the electrode assembly.

## Description

### TECHNICAL FIELD

### CROSS-REFERENCE TO RELATED APPLICATIONS

The present application claims priority to Korean Patent Application No. 10-2023-0105932 filed on August 11, 2023 in the Republic of Korea, the disclosure of which is incorporated herein by reference.

### TECHNICAL FIELD

The present disclosure relates to a pouch cell and a gas release member, and more particularly, to a secondary battery pouch cell that can be charged and discharged and a gas release member for releasing gas inside the pouch cell to the atmosphere.

### BACKGROUND ART

Recently, with rising prices of energy sources caused by depletion of fossil fuels and growing concerns about environmental pollution, the need for eco-friendly alternative energy sources is an essential factor for future life. In this circumstance, studies have been conducted on a variety of energy production technologies such as solar, wind and tidal energy, and energy storage devices such as batteries for using the produced electrical energy more efficiently are of great interest.

Moreover, with technology development and increasing demand for electronic mobile devices and electric vehicles using batteries, the demand for batteries as an energy source is rapidly increasing, and accordingly many studies are being conducted on batteries that meet a variety of needs.

Batteries that store electrical energy may be generally classified into primary batteries and secondary batteries. The primary batteries are single-use or disposable batteries, while the secondary batteries are rechargeable batteries manufactured using materials that can allow repeated oxidation and reduction between electric currents and the materials. That is, when reduction reaction takes place in the material by the electric current, charge is performed, and when oxidation reaction takes place in the material, discharge is performed, and as charge-discharge are repeatedly performed, electricity is produced.

Secondary batteries may be classified into cylindrical cells, pouch cells, prismatic cells, etc. according to the shape. Among them, a pouch cell may be manufactured by receiving a stack-type electrode assembly including a positive electrode, a negative electrode and a separator in a pouch, and sealing the sides of the pouch.

On the other hand, an electrolyte solution may be received in the pouch of the pouch cell together with the electrode assembly. In this instance, inside the pouch of the pouch cell, the remaining moisture of the electrolyte solution or moisture coming in from the outside reacts with a lithium salt to produce hydrogen fluoride (HF), and the decomposition of the electrolyte solution may produce gas such as carbon dioxide, carbon monoxide, ethylene and methane. Additionally, hydrogen and HF may be additionally produced according to the material of the positive electrode included in the electrode assembly of the pouch cell, causing overheating due to overcharge and an internal short circuit during charging and discharging. As a consequence, a large amount of gas may be produced in the pouch. The gas may increase the internal pressure of the pouch, and swelling or venting may occur in the pouch by the increased pressure. Accordingly, the pouch cell may include a structure for releasing gas inside the pouch to the atmosphere to prevent venting.

The conventional pouch cell has a problem that a part of the gas release member gets deformed by the pressure of gas inside the pouch.

Accordingly, there is a need for the gas release member capable of reducing the degree of deformation of a part of the gas release member having a high deformation ratio and the pouch cell including the same.

The pouch cell including the conventional gas release structure has a problem with ingress of external moisture into the pouch through the gas release structure, and an additional problem with performance degradation of the pouch cell due to the moisture ingress.

Accordingly, there is a need for a pouch cell capable of preventing or reducing the ingress of external moisture into a pouch through an area where gas inside the pouch is released to the atmosphere.

### SUMMARY

### TECHNICAL PROBLEM

The present disclosure is directed to providing a gas release member that can release gas inside a pouch to the atmosphere and has a reduced deformation ratio and a pouch cell including the same.

### TECHNICAL SOLUTION

A pouch cell according to the present disclosure may include an electrode assembly including a positive electrode, a negative electrode and a separator, a pouch accommodating the electrode assembly, an electrode lead electrically connected to the electrode assembly and protruded outward from the pouch, a lead film covering a part of the electrode lead to isolate the electrode lead from the pouch, and a gas release member disposed between the electrode lead and the lead film, and configured to form a gas movement route by gas inside the pouch, wherein the gas release member may include a first member, a part of which has a concave shape in a length direction of the electrode lead, and a second member extended from the first member toward the electrode assembly.

The first member may have the concave shape formed on the electrode assembly side in the length direction of the electrode lead.

The first member may have the concave shape formed on an opposite side to the electrode assembly in the length direction of the electrode lead.

The first member may have the concave shape including a curve.

The first member may have the concave shape including a plurality of line segments connected at an obtuse angle.

The first member may have a smaller width than a width of the second member.

The first member may include a first extension portion extended in a width direction of the electrode lead, and a second extension portion connected to the first extension portion and obliquely extended with respect to the width direction of the electrode lead.

The first extension portion may have a larger width than a width of the second extension portion.

The first member may be formed with a length in a width direction of the electrode lead that is equal to or less than a width of the electrode lead.

The gas release member may have a lower adhesion strength with the lead film than an adhesion strength with the electrode lead.

The gas release member may include PTFE.

A pouch cell according to the present disclosure may include an electrode assembly including a positive electrode, a negative electrode and a separator, a pouch accommodating the electrode assembly, an electrode lead electrically connected to the electrode assembly and protruded outward from the pouch, a lead film covering a part of the electrode lead to isolate the electrode lead from the pouch, and a gas release member disposed between the electrode lead and the lead film, and configured to form a gas movement route by gas inside the pouch, wherein the gas release member may have a variable distance from a baseline extended in a width direction of the electrode lead to an outer end portion, between an outer end portion of the pouch and an outer end portion of the lead film.

A gas release member according to the present disclosure may include a first member, a part of which has a concave shape, and a second member connected to the first member and extended in a direction facing away from the first member.

The first member may have the concave shape formed at two sides in a direction perpendicular to an extension direction.

The first member may have the concave shape including a plurality of line segments connected at an obtuse angle.

### ADVANTAGEOUS EFFECTS

According to an exemplary embodiment of the present disclosure, it may be possible to efficiently release gas out of the pouch when the gas is produced in the pouch during charging and discharging of the pouch cell.

Through this, it may be possible to delay or prevent venting in the pouch due to gas inside the pouch, thereby improving safety of the pouch cell.

Additionally, it may be possible to reduce the degree of deformation of a part of the gas release member by the pressure of gas inside the pouch.

Through this, it may be possible to maintain the performance of releasing gas inside the pouch to the atmosphere for a relatively long time.

Additionally, it may be possible to reduce the problems with whitening of the lead film and leakage of the electrolyte solution.

The effects according to the present disclosure are not restricted by the foregoing description and more various effects are included in the specification.

### BRIEF DESCRIPTION OF THE DRAWINGS

FIG. 1 is a schematic perspective view of a pouch cell according to embodiment 1 of the present disclosure.
FIG. 2 is a schematic cross-sectional view of FIG. 1, taken along the line A-A', in the presence of a gas movement route.
FIG. 3 is a schematic partial plan view of a pouch cell according to embodiment 1 of the present disclosure.
FIG. 4 is a schematic plan view of a gas release member of a pouch cell according to embodiment 1 of the present disclosure.
FIG. 5 is a schematic diagram showing the deformation ratio of a conventional gas release member.
FIG. 6 is a schematic diagram showing the deformation ratio of a gas release member according to embodiment 1 of the present disclosure.
FIG. 7 is a schematic plan view of a gas release member of a pouch cell according to embodiment 2 of the present disclosure.

### DETAILED DESCRIPTION

Hereinafter, exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

### Embodiment 1

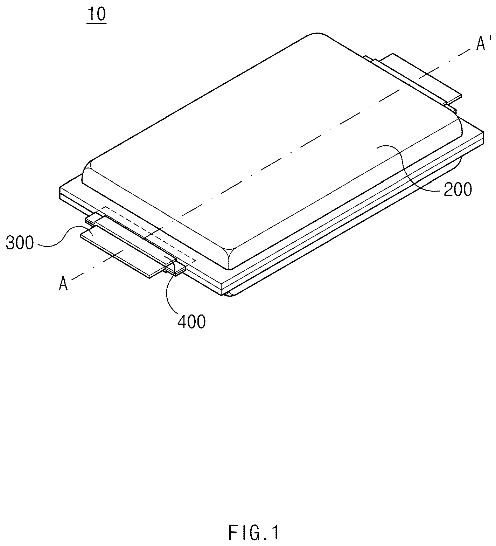

FIG. 1 is a schematic perspective view of a pouch cell 10 according to embodiment 1 of the present disclosure.

The pouch cell 10 according to embodiment 1 of the present disclosure may include an electrode assembly 100, a pouch 200, an electrode lead 300 and a lead film 400.

The pouch cell 10 according to the present disclosure may refer to a pouch-type secondary battery among various types of secondary batteries that can be charged and discharged. The pouch cell 10 may have a shape in which the electrode assembly 100 is received in the pouch 200.

The electrode assembly 100 may include a positive electrode, a negative electrode and a separator. Here, the separator may be disposed between the positive electrode and the negative electrode to physically separate the positive electrode from the negative electrode. The electrode assembly 100 includes a stack-type in which the positive electrode, the negative electrode and the separator are stacked, or a jellyroll-type in which the positive electrode, the negative electrode and the separator are wound.

The electrode assembly 100 may be received in the pouch 200. The pouch 200 may include an inner layer, a metal layer and an outer layer, and the inner layer may have sealability by heat and pressure. After the electrode assembly 100 is received in the pouch 200, the inner layer may be sealed by heat and pressure. The metal layer may primarily include Al and STS. Additionally, the outer layer may have an insulating property.

The inner layer that may seal the pouch 200 through sealing may be made of at least one material selected from the group consisting of polyethylene, polypropylene, polycarbonate, polyethyleneterephthalate, polyvinyl chloride, acrylic polymer, polyacrylonitrile, polyimide, polyamide, cellulose, aramid, nylon, polyester, polyparaphenylenebenzobisoxazole, polyarylate, Teflon, and glass fiber. In particular, polyolefin-based resin such as polypropylene (PP) or polyethylene (PE) may be primarily used.

The pouch cell 10 may include the electrode lead 300. The electrode lead 300 may be disposed such that it is electrically connected to the electrode assembly 100 and protruded outward from the pouch 200. The pouch cell 10 may provide electrical energy to the outside by the electrode lead 300 protruded outward from the pouch 200. Accordingly, the electrode lead 300 may be a conductor.

The lead film 400 may cover the electrode lead 300 to isolate the pouch 200 from the electrode lead 300. Specifically, the lead film 400 may be disposed on two surfaces of the electrode lead 300 to cover the electrode lead 300. The lead film 400 may include a pair of lead films and each lead film 400 may be disposed on each of the two surfaces of the electrode lead 300.

Meanwhile, when gas is produced in the pouch cell 10 during repeated charging and discharging, the internal pressure of the pouch 200 may increase. When the internal pressure of the pouch 200 is too high, venting may occur and the pouch cell 10 may lose the function.

Specifically, an electrolyte solution may be received in the pouch 200 of the pouch cell 10 together with the electrode assembly 100. In this instance, inside the pouch 200 of the pouch cell 10, the remaining moisture of the electrolyte solution or moisture coming in from the outside may react with a lithium salt to produce HF, and the decomposition of the electrolyte solution may produce gas such as carbon dioxide, carbon monoxide, ethylene and methane. Additionally, hydrogen and HF may be additionally produced according to the material of the positive electrode included in the electrode assembly 100 of the pouch cell 10, causing overheating due to overcharge and an internal short circuit during charging and discharging. As a consequence, a large amount of gas may be produced in the pouch 200. Due to the gas, the internal pressure of the pouch increases, and swelling or venting may occur in the pouch 200 by the increased pressure.

The pouch cell 10 according to embodiment 1 of the present disclosure may include a component for releasing gas inside the pouch 200 out of the pouch 200 to prevent venting.

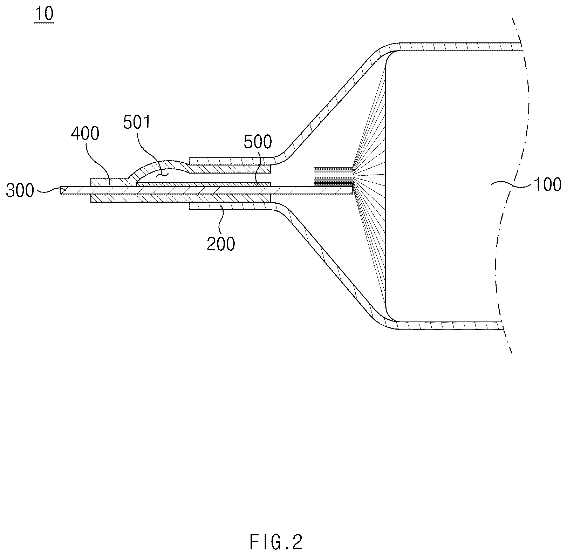

FIG. 2 is a schematic cross-sectional view of FIG. 1, taken along the line A-A', in the presence of a gas movement route 501.

As an example of the component for releasing gas inside the pouch 200 out of the pouch 200, the pouch cell 10 according to embodiment 1 of the present disclosure may further include a gas release member 500 to release gas inside the pouch 200 to the atmosphere.

Referring to FIG. 2, the gas release member 500 may be disposed between the electrode lead 300 and the lead film 400. Specifically, the gas release member 500 may be configured to form the gas movement route 501 by gas inside the pouch 200. More specifically, the gas release member 500 may be configured to form the gas movement route 501 when the internal pressure of the pouch 200 rises above a predetermined pressure by gas inside the pouch 200. In this instance, the gas movement route 501 may be formed between the gas release member 500 and the lead film 400.

Specifically, the adhesion strength between the gas release member 500 and the lead film 400 may be lower than the adhesion strength between the electrode lead 300 and the gas release member 500. Accordingly, when the internal pressure of the pouch 200 rises by gas inside the pouch 200, adhesion between the gas release member 500 and the lead film 400 having lower adhesion strength may be loosened. When the gas release member 500 and the lead film 400 are debonded, a space may be formed between the gas release member 500 and the lead film 400, and the space may become the gas movement route 501.

Gas moving to the gas movement route 501 may pass through the lead film 400 and exit the pouch 200. That is, gas may penetrate through the lead film 400. Specifically, the lead film 400 may allow only gases to pass through, and prevent the movement of liquids and solids through the lead film 400. In this instance, gas may move at molecular level and pass through the lead film 400 by diffusion.

To form the gas movement route 501, the gas release member 500 may include fluororesin. For example, the fluororesin may include polytetrafluoroethylene (PTFE). Besides, the fluororesin may include PFA, PFEP, ETFE and PVDF.

Additionally, to enhance the adhesion strength with the electrode lead 300, the gas release member 500 may include a plurality of layers.

Meanwhile, when the internal pressure rise of the pouch 200 continues, a force may be continuously applied to the gas release member 500. By the force or pressure, a part of the gas release member 500 may change in shape. In particular, when the force acts at a specific point of the gas release member 500, the shape deformation ratio may be relatively high.

When the gas release member 500 changes in shape, the gas release performance of the pouch cell 10 may be reduced and problems such as whitening and electrolyte leakage may occur. Accordingly, the gas release member 500 for reducing the deformation ratio may be necessary.

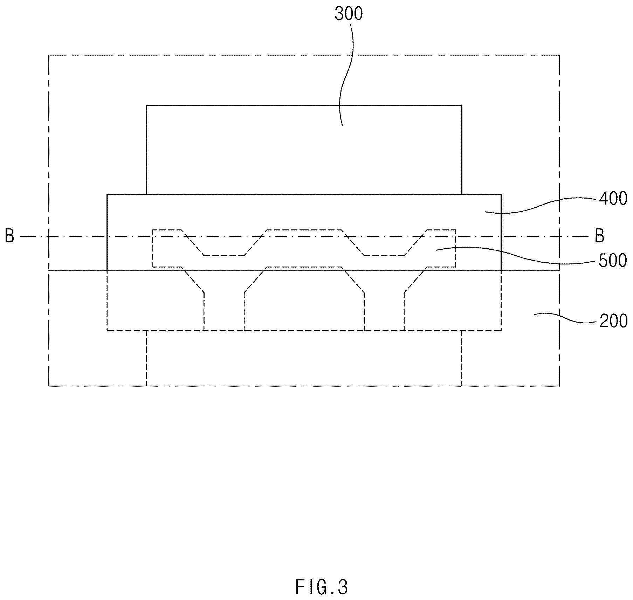

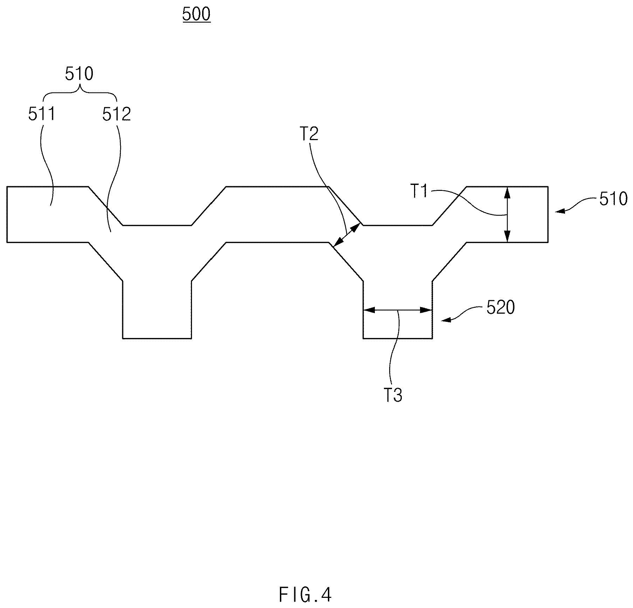

FIG. 3 is a schematic partial plan view of the pouch cell 10 according to embodiment 1 of the present disclosure, and FIG. 4 is a schematic plan view of the gas release member 500 of the pouch cell 10 according to embodiment 1 of the present disclosure.

As an example of the component for reducing the deformation ratio, a part of the gas release member 500 of the pouch cell 10 according to embodiment 1 of the present disclosure may have a concave shape. Specifically, the gas release member 500 may have a variable distance from a baseline B-B' to an outer end portion. Here, the baseline B-B' may be formed between the outer end portion of the pouch 200 and the outer end portion of the lead film 400.

Referring to FIG. 3, the outer end portion of the gas release member 500 may be formed with a variable distance to the baseline B-B'. Here, the term outer may refer to being farthest away from the electrode assembly 100. That is, each of the outer end portion of the pouch 200, the outer end portion of the lead film 400 and the outer end portion of the gas release member 500 may refer to the uppermost of each component on the basis of FIG. 3. The baseline B-B' may refer to an imaginary line between the outer end portion of the pouch 200 and the outer end portion of the lead film 400. Additionally, the baseline B-B' may refer to a line extended in the width direction of the electrode lead 300. On the basis of FIG. 3, the baseline B-B' may be extended in the horizontal direction.

When there is the imaginary baseline B-B', the conventional gas release member has a constant distance from the outer end portion to the baseline B-B'. In contrast, the gas release member 500 according to embodiment 1 of the present disclosure may have a variable distance from the outer end portion to the baseline B-B'. By this shape difference, the gas release member 500 according to embodiment 1 of the present disclosure may have a relatively small change in shape caused by the pressure of gas.

Hereinafter, the shape of the gas release member 500 will be described in detail.

The gas release member 500 may include a first member 510, a part of which has the concave shape. Specifically, the gas release member 500 may include the first member 510 and a second member 520.

A part of the first member 510 of the gas release member 500 may have the concave shape in the length direction of the electrode lead 300. Additionally, the second member 520 of the gas release member 500 may be extended from the first member 510 toward the electrode assembly 100. Specifically, the first member 510 may have the concave shape formed on the electrode assembly 100 side in the length direction of the electrode lead 300. Additionally, the second member 520 may include a plurality of second members. The pair of second members 520 of the gas release member 500 according to embodiment 1 of the present disclosure are described by way of example.

Referring to FIG. 4, the first member 510 of the gas release member 500 may have the concave shape formed on the electrode assembly 100 side in the length direction of the electrode lead 300. Here, the length direction of the electrode lead 300 may refer to the vertical direction on the basis of FIG. 4. Specifically, the concave shape of the first member 510 formed on the electrode assembly 100 side may be formed between the second members 520. More specifically, the concave shape of the first member 510 on the electrode assembly 100 side may be a portion connecting the pair of second members 520.

Referring to FIG. 4, the first member 510 of the gas release member 500 may have the concave shape formed on the opposite side to the electrode assembly 100 in the length direction of the electrode lead 300. Here, the length direction of the electrode lead 300 may refer to the vertical direction on the basis of FIG. 4. Specifically, the first member 510 may have a plurality of concave shapes formed on the opposite side to the electrode assembly 100. The first member 510 of the gas release member 500 according to embodiment 1 of the present disclosure having a pair of concave shapes formed on the opposite side to the electrode assembly 100 is described by way of example.

As an example of the shape for reducing the deformation ratio of the gas release member 500, the first member 510 of the gas release member 500 according to embodiment 1 of the present disclosure may have the concave shape including a plurality of line segments connected at an obtuse angle. In this instance, the dimension of the obtuse angle between the plurality of line segments may be determined through an experiment.

The conventional gas release member does not include the line segments that form an obtuse angle. Accordingly, a force may act at a specific point due to the pressure by gas inside the pouch 200, resulting in high deformation ratio. In contrast, the concave part of the gas release member 500 according to embodiment 1 of the present disclosure may include the plurality of line segments connected at an obtuse angle. Accordingly, it may be possible to dissipate the force acting at a specific point due to the pressure by gas inside the pouch 200, thereby reducing the deformation ratio of the region of the gas release member 500 having higher deformation ratio.

Meanwhile, the length of the first member 510 of the gas release member 500 in the width direction of the electrode lead 300 may be equal to or less than the width of the electrode lead 300. When the length of the first member 510 in the width direction of the electrode lead 300 is greater than the width of the electrode lead 300, a part of the first member 510 may be disposed outside of the electrode lead 300. In this case, there is a high likelihood that problems with sealability of the pouch cell 10 and insulation of the electrode lead 300 will occur. Accordingly, the length of the first member 510 in the width direction of the electrode lead 300 may be equal to or less than the width of the electrode lead 300.

Referring to FIG. 4, the first member 510 of the gas release member 500 according to embodiment 1 of the present disclosure may include a first extension portion 511 and a second extension portion 512.

The first extension portion 511 of the first member 510 may be extended in the width direction of the electrode lead 300, and the second extension portion 512 of the first member 510 may be obliquely extended with respect to the width direction of the electrode lead 300. Additionally, the first extension portion 511 and the second extension portion 512 may be connected to each other. On the basis of FIG. 4, the width direction of the electrode lead 300 may refer to the horizontal direction. The first member 510 may include a plurality of first extension portions 511 and a plurality of second extension portions 512.

Referring to FIG. 4, the concave shape of the first member 510 may be formed by the connected part of the first extension portion 511 and the second extension portion 512. Specifically, the concave shape of the first member 510 may be formed by one end of the first extension portion 511 and one end of each of the second extension portions 512 disposed at two sides.

Meanwhile, the thickness of the components of the gas release member 500 may be different.

The first member 510 of the gas release member 500 may have a smaller width than the width of the second member 520. That is, the width T1, T2 of all the parts of the first member 510 may be smaller than width T3 of the second member 520 (see FIG. 4). Additionally, the first member 510 may have a larger width T1 of the first extension portion 511 than the width T2 of the second extension portion 512 (see FIG. 4).

The relative width difference between the components of the gas release member 500 may be advantageous for reducing the deformation ratio through experiments. Additionally, a specific numerical value about the width of the component for minimizing deformation of the gas release member 500 may be obtained by repeated experiments.

The numerical values about the width of the components of the gas release member 500 obtained through the experiments are roughly as follows. The width T1 of the first extension portion 511 may be 2 mm or more and 6 mm or less, and the width T2 of the second extension portion 512 may be 1 mm or more and 5 mm or less. Additionally, the width T3 of the second member 520 may be 3 mm or more and 8 mm or less. Preferably, the width T1 of the first extension portion 511 may be 3 mm or more and 5 mm or less, the width T2 of the second extension portion 512 may be 2 mm or more and 4 mm or less, and the width T3 of the second member 520 may be 5 mm or more and 7 mm or less.

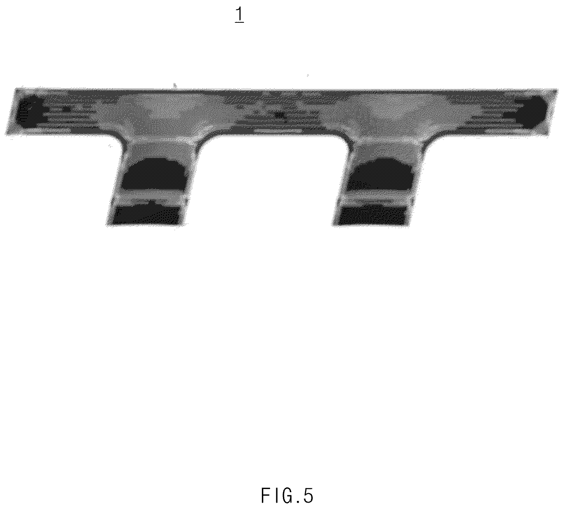

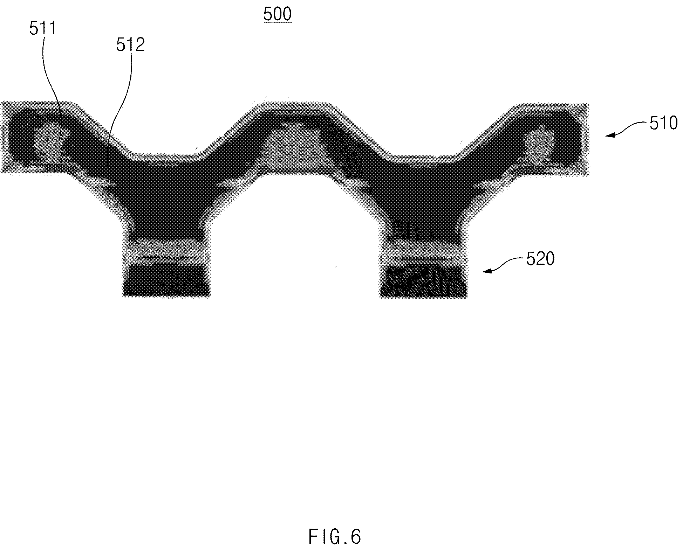

FIG. 5 is a schematic diagram showing the deformation ratio of the conventional gas release member 1, and FIG. 6 is a schematic diagram showing the deformation ratio of the gas release member 500 according to embodiment 1 of the present disclosure.

FIGS. 5 and 6 are graphs that present the degree of deformation of the gas release member in color. Here, the regions having higher deformation ratio are indicated in red.

Referring to FIG. 5, it can be seen that the conventional gas release member 1 has higher deformation ratio at the end portion disposed on the electrode assembly 100 side and the end portion disposed on the opposite side to the electrode assembly 100. Here, the end portion disposed on the electrode assembly 100 side may refer to the area below the horizontally extended portion of the gas release member 1, and the end portion disposed on the opposite side to the electrode assembly 100 may refer to the area above the horizontally extended portion of the gas release member 1.

Referring to FIG. 6, it can be seen that the gas release member 500 according to embodiment 1 of the present disclosure has fewer and smaller regions having high deformation ratio than the conventional art. In particular, it confirms a reduction in deformation ratio at the end portion disposed on the electrode assembly 100 side and the end portion disposed on the opposite side to the electrode assembly 100.

The pouch cell 10 according to embodiment 1 of the present disclosure may include the gas release member 500 having a shape for lower deformation ratio. Accordingly, it may be possible to reduce the shape deformation ratio by the internal pressure of the pouch 200, and maintain the gas release performance for a longer time. Through this, it may be possible to maintain the performance of the pouch cell 10 for a relatively long time. Additionally, it may be possible to prevent or reduce the problems with whitening of the lead film 400 and leakage of the electrolyte solution due to the continual pressure by gas inside the pouch 200.

### Embodiment 2

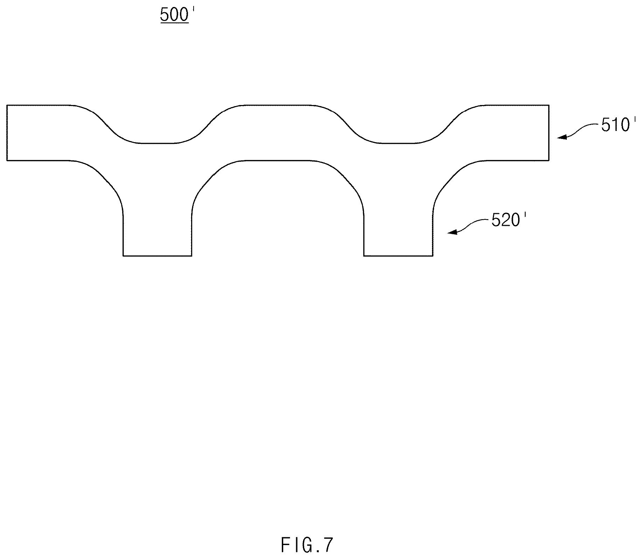

FIG. 7 is a schematic plan view of the gas release member 500' of the pouch cell according to embodiment 2 of the present disclosure.

Hereinafter, a detailed description of the same component as the component of the pouch cell 10 according to embodiment 1 of the present disclosure is omitted, and a difference will be described.

The pouch cell according to embodiment 2 of the present disclosure may be different from the pouch cell 10 according to embodiment 1 of the present disclosure in the shape of the gas release member 500'.

The gas release member 500' according to embodiment 2 of the present disclosure may include the first member 510' and the second member 520'. Specifically, a part of the first member 510' may have a concave shape in the length direction the electrode lead 300, and the second member 520' may be extended from the first member 510' toward the electrode assembly 100. More specifically, the first member 510' may have the concave shape formed on the electrode assembly 100 side and the concave shape formed on the opposite side to the electrode assembly 100 in the length direction of the electrode lead 300.

Referring to FIG. 7, the gas release member 500' according to embodiment 2 of the present disclosure may include the first member 510' having the concave shape including a curve. That is, in the first member 510', the concave shape formed on the electrode assembly 100 side and the concave shape formed on the opposite side to the electrode assembly 100 in the length direction of the electrode lead 300 may include the curve.

Because the first member 510' of the gas release member 500' according to embodiment 2 of the present disclosure includes the concave shape including the curve, the degree of deformation by gas inside the pouch 200 may be smaller than that of the conventional gas release member 1.

Meanwhile, the first member 510' may have a rounded connected part of the first extension portion and the second extension portion.

Although not described herein in detail, the concave shape formed in the first member of the gas release member may include the curve and line segments.

Although the present disclosure has been hereinabove described with regard to a limited number of embodiments and drawings, the present disclosure is not limited thereto and may be embodied in different forms by persons having ordinary skill in the technical field pertaining to the present disclosure within the technical aspect of the present disclosure and the scope of the appended claims and their equivalents.

## Claims

1. A pouch cell comprising:
an electrode assembly including a positive electrode, a negative electrode and a separator;
a pouch accommodating the electrode assembly;
an electrode lead electrically connected to the electrode assembly and protruded outward from the pouch;
a lead film covering a part of the electrode lead to isolate the electrode lead from the pouch; and
a gas release member disposed between the electrode lead and the lead film, and configured to form a gas movement route by gas inside the pouch,
wherein the gas release member includes:
a first member, a part of which has a concave shape in a length direction of the electrode lead; and
a second member extended from the first member toward the electrode assembly.

2. The pouch cell according to claim 1,
wherein the first member has the concave shape formed on the electrode assembly side in the length direction of the electrode lead.

3. The pouch cell according to claim 1,
wherein the first member has the concave shape formed on an opposite side to the electrode assembly in the length direction of the electrode lead.

4. The pouch cell according to claim 1,
wherein the first member has the concave shape including a curve.

5. The pouch cell according to claim 1,
wherein the first member has the concave shape including a plurality of line segments connected at an obtuse angle.

6. The pouch cell according to claim 1,
wherein the first member has a smaller width than a width of the second member.

7. The pouch cell according to claim 1,
wherein the first member includes:
a first extension portion extended in a width direction of the electrode lead; and
a second extension portion connected to the first extension portion and obliquely extended with respect to the width direction of the electrode lead.

8. The pouch cell according to claim 7,
wherein the first extension portion has a larger width than a width of the second extension portion.

9. The pouch cell according to claim 1,
wherein the first member is formed with a length in a width direction of the electrode lead that is equal to or less than a width of the electrode lead.

10. The pouch cell according to claim 1,
wherein the gas release member has a lower adhesion strength with the lead film than an adhesion strength with the electrode lead.

11. The pouch cell according to claim 1,
wherein the gas release member includes PTFE.

12. A pouch cell comprising:
an electrode assembly including a positive electrode, a negative electrode and a separator;
a pouch accommodating the electrode assembly;
an electrode lead electrically connected to the electrode assembly and protruded outward from the pouch;
a lead film covering a part of the electrode lead to isolate the electrode lead from the pouch; and
a gas release member disposed between the electrode lead and the lead film, and configured to form a gas movement route by gas inside the pouch,
wherein the gas release member has a variable distance from a baseline extended in a width direction of the electrode lead to an outer end portion, between an outer end portion of the pouch and an outer end portion of the lead film.

13. A gas release member comprising:
a first member, a part of which has a concave shape; and
a second member connected to the first member and extended in a direction facing away from the first member.

14. The gas release member according to claim 13,
wherein the first member has the concave shape formed at two sides in a direction perpendicular to an extension direction.

15. The gas release member according to claim 13,
wherein the first member has the concave shape including a plurality of line segments connected at an obtuse angle.
